Europäisches Patentamt

European Patent Office

Office européen des brevets

(19)

(11) EP 0 814 575 A1

(12) DEMANDE DE BREVET EUROPEEN

(43) Date de publication:
29.12.1997 Bulletin 1997/52

(51) Int Cl.⁶: **H04B 7/08**, H04B 7/005

(21) Numéro de dépôt: 97401326.0

(22) Date de dépôt: 12.06.1997

(84) Etats contractants désignés:
**AT BE CH DE DK ES FI FR GB GR IE IT LI LU MC NL PT SE**

(30) Priorité: 21.06.1996 FR 9607750

(71) Demandeur: **ALCATEL TELSPACE**
**92734 Nanterre Cédex (FR)**

(72) Inventeur: **Richard, Joel**
**95150 Taverny (FR)**

(74) Mandataire: **Feray, Valérie**
**c/o Alcatel Alsthom Recherche IPD,**
**30, avenue Kléber**
**75016 Paris (FR)**

(54) **Egaliseur-combineur, pour récepteur en diversité, récepteur et procédé de réception en diversité correspondant**

(57) L'invention concerne un égaliseur-combineur pour récepteur mettant en oeuvre au moins deux voies de réception, dans lequel des moyens ($33_i$) de calcul de coefficients d'égalisation de chacune desdites voies tiennent compte :

- d'un premier signal d'erreur de voie, représentatif d'une comparaison ($313_i$) entre le signal démodulé et une estimation de voie du signal source émis, délivrée par un estimateur de voie ($312_i$), lors d'une phase d'acquisition, et
- d'un second signal d'erreur de voie, représentatif d'une comparaison ($313_i$) entre le signal démodulé et une estimation globale (38) du signal source émis, lors d'une phase de fonctionnement normal,

et des moyens (314) de calcul de coefficients de pondération tenant compte :

- d'un premier signal d'erreur globale, représentatif d'une comparaison (315) entre un signal combiné et ladite estimation globale (38), lors de ladite phase d'acquisition, et
- d'un second signal d'erreur globale, représentatif d'une comparaison (315) entre une information de référence locale et une information de référence reçue correspondante, extraite périodiquement de ladite estimation globale, lors de ladite phase de fonctionnement normal.

Fig. 3

## Description

Le domaine de l'invention est celui de la réception de signaux en diversité. Plus précisément, l'invention concerne l'égalisation et la combinaison de signaux reçus sur les différentes voies d'un récepteur en diversité. Elle s'applique avantageusement dans tous les cas où une transmission est réalisée sur un canal sélectif et/ou brouillé.

Un domaine d'application privilégié de l'invention est ainsi celui des transmissions sur canal troposphérique. Un tel canal est classiquement sujet à des évanouissements de Rayleigh ("fadings" profonds et rapides, jusqu'à 15 000 dB/s). Il est de plus très sélectif en fréquence, la bande de cohérence du canal étant souvent inférieure au débit transmis.

La réception en diversité repose sur la réception d'un même signal source sur une pluralité de voies distinctes (de nombre au moins égal à 2). Chacune de ces voies est traitée (égalisation) indépendamment. Elles sont ensuite combinées (sommation pondérée). Le signal combiné est par la suite traité classiquement, pour reconstruire le signal émis de la façon la plus fiable possible.

Dans le cas de la transmission troposphérique, la diversité est assurée par l'émission simultanée du même signal sur autant de fréquences porteuses qu'il y a de voies. Elle peut également être obtenue en répartissant plusieurs antennes dans l'espace, au voisinage du récepteur.

L'égalisation-combinaison en diversité est soumise à plusieurs problèmes, notamment en transmission troposphérique.

En effet. à faible rapport signal/bruit, les égaliseurs ont tendance à décrocher, ou rencontrent des difficultés à converger, à cause d'erreurs de décision lors de l'estimation de l'information reçue, qui sert de critère pour l'égalisation.

Par ailleurs, il est très difficile à mettre en phase les égaliseurs avant combinaison de diversité. Les retards différentiels de propagation entre voies de diversité ne permettent pas de "fixer" un coefficient (dit central). Le degré de liberté ainsi laissé doit être compensé par une autre contrainte pour une combinaison en phase.

Plus précisément, sur un canal fortement sélectif, les différentes voies peuvent avoir des retards relatifs dépassant la durée du symbole transmis. Lors de la sommation (combinaison), les différentes voies doivent être remises en phases. Le calcul est instable et à propagation catastrophique (interaction des égaliseurs), problème éludé ou pallié par un algorithme lent.

On peut distinguer trois grandes classes de combineurs, à savoir :

- par sélection :
  sortie = max $(p_1; p_2...; p_n)$     $p_i=1$ : puissance du signal sur la voie i     $S/N_{sortie}=\max((S/N)_1)$
- à gain égal :

sortie = $p_1+ p_2 +...+ p_n$
si $S_1=S_2=S_n$     $S/N_{sortie}=(S/N)_i{}^*{}_n$
si $S_1=0$ pour $i<>k$     $S/N_{sortie}=(S/N)_{k/n}$

- optimal :
  sortie = $a_1p_1 + a_2p_2 +\cdots+a_np_n$ avec $a_1=K^*(S/N)_i$
  $S/N_{sortie} =(S/N)_1+(S/N)_2+...+(S/N)_n$

m étant l'ordre de diversité, ou nombre de voies.

Le combineur par sélection n'apporte pas de gain de combinaison. Sa sortie est simplement égale à l'entrée la meilleure.

Le combineur à gain égal fait participer toutes les voies, qu'elles améliorent ou dégradent le signal combiné.

Le combineur optimal maximalise le rapport signal/bruit. La difficulté est d'évaluer ce rapport sur chaque voie.

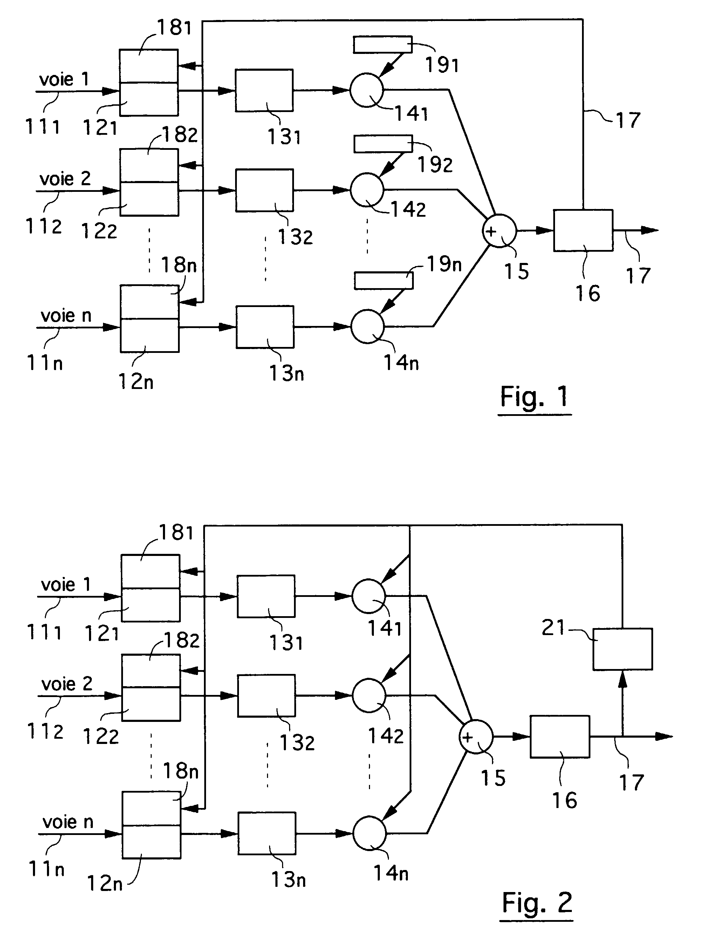

La figure 1 illustre un égaliseur-combineur de type connu, à combineur optimal.

Chaque voie $11_1$ à $11_n$ alimente un égaliseur $12_1$ à $12_n$, puis un démodulateur $13_1$ à $13_n$ et un pondérateur $14_1$ à $14_n$. Les signaux pondérés sont combinés par un sommateur 15 qui alimente un module 16 de prise de décision délivrant une estimation 17 du signal reçu, pour la suite du traitement.

Les coefficients d'égalisation sont déterminés par des modules de calcul $18_1$ à $18_n$, en fonction de l'estimation 17 du signal reçu.

La pondération avant combinaison peut être pilotée :

- soit par la même information 17. Dans ce cas, l'égaliseur fait lui-même office de pondérateur. La désynchronisation des voies, ou la mauvaise qualité d'une voie, fait alors diverger l'égaliseur de la voie, qui déséquilibre le combineur, qui provoque des erreurs de décision sur la voie combinée, qui fait diverger les autres égaliseurs...
- soit par une information externe, telle qu'une tension de CAG $19_1$-$19_N$, une mesure de bruit,... Une telle information externe peut être sujette à caution principalement dans les cas de limite de capacité de correction de l'égaliseur ou de présence d'un brouilleur entraînant la capture de CAG. Elle ne représente pas forcément la qualité de la voie.

Lorsque l'on s'appuie sur une mesure de la puissance reçue (P=S+N; si N fixe, alors a=K*S), la difficulté (et la source d'erreur) est d'évaluer S dans la mesure de P. Le système est sensible à la variation de N, au brouillage et aux distorsions (non-intégrité de S).

Dans le cas d'une mesure du bruit après amplification à CAG (P=S + N=Cste, et a=K/N), la mesure de bruit est faite hors bande, d'où des erreurs. Par ailleurs, le système est sensible à la sélectivité du milieu de propagation, au brouillage, aux distorsions et à la pollution du spectre hors bande.

Pour pallier ces inconvénients, on a développé des égaliseurs dits "reference directed", qui reposent sur l'insertion d'une séquence de référence (connue de la réception) à l'émission. Les calculs de coefficients de l'égaliseur et du combineur n'utilisent que ces symboles de référence.

Un tel dispositif est illustré en figure 2. Le dispositif 21 d'analyse de la séquence de référence pilote à la fois les pondérateurs $14_1$ à $14_n$ et les modules de calcul des coefficients d'égalisation $18_1$ à $18_n$.

Un des inconvénients de cette technique est que, quand le canal varie vite, le sur-débit apporté par la séquence de référence peut être prohibitif, surtout quand l'algorithme de convergence est lent (choix de l'algorithme du gradient fréquent par recherche de simplicité, de robustesse et de stabilité).

Par ailleurs, il nécessite l'émission périodique d'une séquence de référence relativement longue, ce qui se traduit par une perte de débit utile importante.

L'invention a notamment pour objectif de pallier ces différents inconvénients de l'état de la technique.

Plus précisément, un objectif de l'invention est de fournir un égaliseur-combineur pour récepteurs en diversité qui offre des performances supérieures aux systèmes connus, tant en ce qui concerne l'égalisation que la combinaison (pondération).

Ainsi, l'invention a pour objectif de fournir un tel égaliseur-combineur capable de fonctionner à très faible niveau. En particulier, les égaliseurs selon l'invention ne doivent pas être soumis à un effet de seuil, ni à des décrochages.

Un autre objectif de l'invention est de fournir un tel égaliseur-combineur, qui assure simplement et efficacement la synchronisation des différentes voies de réception, même en présence d'un canal de transmission très dispersif.

L'invention a également pour objectif de fournir un tel égaliseur-combineur, capable d'éliminer une voie en panne, ou de limiter fortement un voie de faible qualité.

Encore un autre objectif de l'invention est de fournir un tel égaliseur-combineur, qui ne nécessite pas une diminution importante du débit utile de transmission.

Ces objectifs, ainsi que d'autres qui apparaîtront par la suite, sont atteints selon l'invention à l'aide d'un égaliseur-combineur pour récepteur en diversité, mettant en oeuvre au moins deux voies de réception recevant chacune un signal numérique reçu, correspondant à un signal numérique émis unique, chacune desdites voies de réception comprenant :

- un égaliseur, piloté par des moyens de calcul de coefficients d'égalisation et délivrant un signal égalisé,
- un démodulateur, alimenté par ledit signal égalisé et délivrant un signal démodulé, et
- un pondérateur, recevant ledit signal démodulé et délivrant un signal pondéré, en fonction d'un coefficient de pondération,

lesdits signaux pondérés étant ensuite combinés par un sommateur de diversité, délivrant un signal combiné et alimentant un estimateur global, qui délivre une estimation globale du signal source émis,

lesdits moyens de calcul de coefficients d'égalisation de chacune desdites voies tenant compte :

- d'un premier signal d'erreur de voie, représentatif d'une comparaison entre ledit signal démodulé et une estimation de voie du signal source émis, délivrée par un estimateur de voie alimenté par ledit signal démodulé dans ladite voie, lors d'une phase d'acquisition, et
- d'un second signal d'erreur de voie, représentatif d'une comparaison entre ledit signal démodulé et ladite estimation globale du signal source émis, lors d'une phase de fonctionnement normal,

et l'égaliseur-combineur comprenant des moyens de calcul desdits coefficients de pondération, tenant compte :

- d'un premier signal d'erreur globale, représentatif d'une comparaison entre ledit signal combiné et ladite estimation globale du signal source émis, lors de ladite phase d'acquisition, et
- d'un second signal d'erreur globale, représentatif d'une comparaison entre une information de référence locale, connue a priori du récepteur, et une information de référence reçue correspondante, extraite périodiquement de ladite estimation globale, lors de ladite phase de fonctionnement normal.

Ainsi, selon l'invention, on prévoit deux phases distinctes :

- en phase 1 (acquisition) :

    - les égaliseurs convergent à partir de l'erreur calculée par différence entre leur propre décision et leur propre signal égaliseur;
    - le combineur converge à partir de l'erreur combinée calculée d'après sa décision (estimation).

- en phase 2 (fonctionnement normal) :

    - les égaliseurs "suivent" à partir de l'erreur calculée par différence entre la décision combinée (donc de meilleure qualité) et leur propre signal égalisé.
    - le combineur "suit" à partir de l'erreur calculée par différence entre le signal de référence reçu, combiné et la référence locale (information sûre).

Contrairement à ce qui est fait en général (estimation de canal, proportionnalité aux tensions de CAG) qui tendent à compenser le canal, le calcul des pondérations selon l'invention tend à rendre maximale la qualité du signal transmis en mesurant l'erreur sur celui-ci (à certains instants).

Cette technique permet d'obtenir un fonctionnement optimal, même à très faible niveau (en particulier, pas d'effet de seuil, pas de décrochage : en l'absence de signal, l'égaliseur reste stable, la re-convergence est immédiate).

En absence de signal, l'égaliseur ne reçoit que du bruit, à moyenne nulle, et ne converge pas vers un pseudo-équilibre (position auto-stable), car il est contraint à la recherche de l'information donnée par le combineur (en phase de fonctionnement normal).

Dès le retour d'un peu de signal, il y a reprise de la convergence de l'égaliseur, sans le besoin de beaucoup d'énergie pour le "déloger" d'une position auto-stable.

La synchronisation entre les voies de diversité est automatique : au passage de phase 1 en phase 2 si la convergence initiale d'un égaliseur, alors indépendant, entraînait une mauvaise synchronisation (ce qui est possible si le canal de transmission est très dispersif), le calculateur de coefficients de diversité (combineur) éliminerait la voie désynchronisée (non cohérence de la référence) pour forcer une nouvelle convergence à la bonne position.

L'élimination d'une voie en panne est automatique car son coefficient de pondération est mis à zéro. Enfin, l'invention assure la pondération en fonction de sa qualité résiduelle d'une voie brouillée ou distordue au delà des capacités de l'égaliseur.

De façon avantageuse, l'égaliseur-combineur de l'invention comprend des moyens de contrôle du passage de la phase d'acquisition à la phase de fonctionnement normal, assurant le passage à ladite phase de fonctionnement normal en fonction d'une mesure d'un taux d'erreur sur ladite information de référence.

Le calcul de ce taux d'erreur est particulièrement aisé et précis, du fait que !'information de référence est connue (structure et emplacement dans la trame) par l'égaliseur-combineur.

Selon un mode de réalisation particulier de l'invention, lesdits moyens de contrôle du passage de la phase d'acquisition à la phase de fonctionnement normal gèrent indépendamment les instants de changement de phase pour lesdits égaliseurs et pour lesdits pondérateurs.

En d'autres termes, une phase intermédiaire, facultative et très courte, peut être prévue, pendant laquelle les égaliseurs continuent à fonctionner selon le mode d'acquisition, alors que la pondération se base déjà sur l'analyse de l'information de référence.

De façon avantageuse, lesdits moyens de calcul desdits coefficients de pondération mettent en oeuvre l'algorithme du gradient, visant à minimiser l'expression $|z_k - y_k|^2$ en fonction de $a_i$, où :

- $y_k$ est l'information de référence connue du

récepteur ;

- $z_k$ est l'information de référence tel que contenue dans ledit signal combiné, avec : $z_k = a_1 x_{k1} + ... + a_m x_{km}$, où :

 - m est le nombre de voies ;
 - $x_{ki}$ est l'information de référence tel que contenue dans la voie indicée i ;
 - $a_i$ est le coefficient de pondération affecté à la voie indicée i ;

- k est un indice temporel.

L'utilisation de l'algorithme du gradient est particulièrement avantageuse, du fait notamment de sa simplicité et de sa stabilité.

Selon un mode de réalisation préférentiel de l'invention, lesdits égaliseurs mettent en oeuvre des filtres transverses à coefficients complexes libres.

Le débit supplémentaire imposé par l'information de référence est faible, par rapport à la technique connue "reference directed", discutée précédemment. En effet, le combineur seul demande beaucoup moins de précision que l'ensemble combineur-égaliseur.

Avantageusement, un mot unique est inséré dans chaque trame de signal émis, à un emplacement prédéterminé, permettant de synchroniser l'information de référence.

L'invention concerne également, bien sûr, les récepteurs en diversité mettant en oeuvre des égaliseurs-combineurs tels que décrits ci-dessus, ainsi que le procédé de réception en diversité correspondant.

Selon ce procédé, la réception s'effectue sur au moins deux voies de réception recevant chacune un signal numérique reçu, correspondant à un signal numérique émis unique. chacun desdits signaux numériques reçus étant égalisé, démodulé et pondéré séparément. puis regroupé pour former un signal combiné qui est soumis à une prise de décision globale pour délivrer une estimation globale du signal source émis, les coefficients d'égalisation de chacune desdites voies étant calculés en fonction :

- d'un premier signal d'erreur de voie, représentatif d'une comparaison entre ledit signal démodulé et une estimation de voie du signal source émis, lors d'une phase d'acquisition, et
- d'un second signal d'erreur de voie, représentatif d'une comparaison entre ledit signal démodulé et ladite estimation globale du signal source émis, lors d'une phase de fonctionnement normal,

et les coefficients de pondération étant calculés en fonction :

- d'un premier signal d'erreur globale, représentatif d'une comparaison entre ledit signal combiné et ladite estimation globale du signal source émis, lors de ladite phase d'acquisition, et

- d'un second signal d'erreur globale, représentatif d'une comparaison entre une information de référence locale, connue a priori du récepteur, et une information de référence reçue, extraite périodiquement de ladite estimation globale, lors de ladite phase de fonctionnement normal.

Ce procédé comprend avantageusement une étape de détermination d'un taux d'erreur sur ladite information de référence, et une étape de contrôle du passage de ladite phase d'acquisition à ladite phase de fonctionnement normal, par comparaison dudit taux d'erreur à un premier seuil prédéterminé.

Ce procédé peut également prévoir une phase intermédiaire, entre ladite phase d'acquisition et ladite phase de fonctionnement normal, pendant laquelle :

- lesdits coefficients d'égalisation de chacune desdites voies sont calculés en fonction dudit premier signal d'erreur de voie, représentatif d'une comparaison entre ledit signal démodulé et une estimation de voie du signal source émis, et
- lesdits coefficients de pondération sont calculés en fonction dudit second signal d'erreur globale, représentatif d'une comparaison entre une information de référence locale, connue a priori du récepteur, et une information de référence reçue correspondante, extraite périodiquement de ladite estimation globale.

Selon une caractéristique avantageuse de l'invention, on prévoit un passage de ladite phase de fonctionnement normal vers ladite phase d'acquisition, lorsque le taux d'erreur calculé sur ladite information de référence est supérieur à un second seuil prédéterminé.

D'autres caractéristiques et avantages de l'invention apparaîtront à la lecture de la description suivante d'un mode de réalisation préférentiel de l'invention, donné à titre de simple exemple illustratif et non limitatif, et des figures annexées, parmi lesquels :

- les figures 1 et 2 illustrent deux techniques connues d'égalisation-combinaison pour récepteurs en diversité, déjà commentées en préambule ;
- la figure 3 illustre un mode de réalisation d'égaliseur-combineur selon l'invention ;
- la figure 4 est un schéma synoptique simplifié du procédé de l'invention, mis en oeuvre par l'égaliseur-combineur de la figure 3.

Le mode de réalisation préférentiel décrit ci-dessous peut s'appliquer notamment dans un système émetteur-récepteur de faisceau hertzien fonctionnant en diffusion troposphérique.

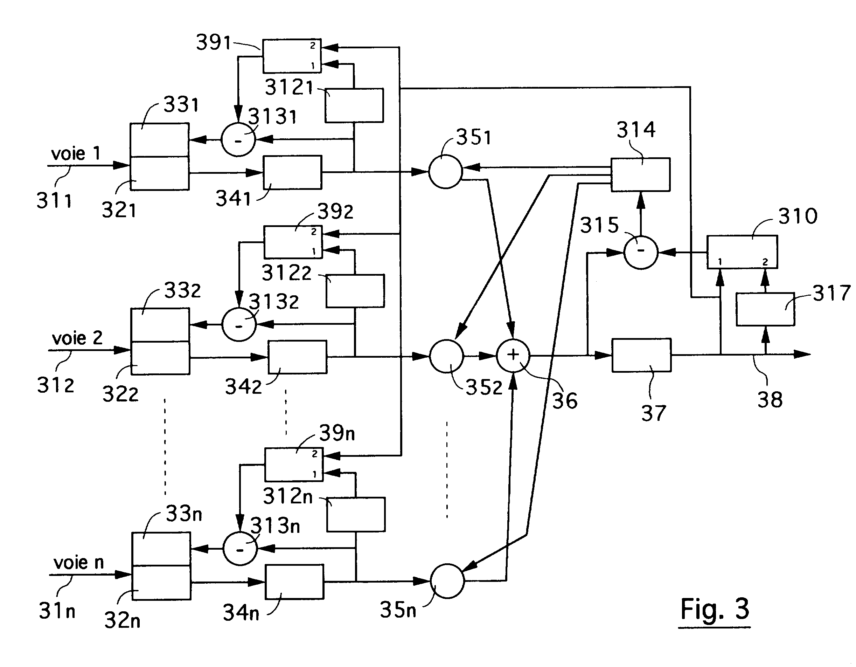

L'égaliseur-combineur d'un récepteur d'un tel système est illustré en figure 3.

Les signaux $31_1$ à $31_n$ reçus sur chaque voie (n = 6, par exemple) alimentent l'égaliseur de voie $32_1$ à $32_n$ correspondant (après avoir été, classiquement, ramenés en bande de base). Ces égaliseurs peuvent être de tout type adéquat.

Les coefficients d'égalisation sont délivrés par des modules calcul des coefficients $33_1$ à $33_n$, en fonction des données décrites par la suite.

Les signaux égalisés alimentent des démodulateurs $34_1$ à $34_n$. La démodulation est du type différentiellement cohérente.

Après démodulation, les signaux sont combinés. Pour cela, ils sont pondérés (multiplications $35_1$ à $35_n$ par un coefficient de pondération) puis regroupés par le sommateur 36.

Le signal combiné alimente un module 37 de prise de décision qui délivre un bit de signe du signal numérique (décision dure). Cette information 38 alimente la suite du traitement (non illustrée).

Comme indiqué précédemment, l'invention prévoit deux phases de fonctionnement, pour le calcul des coefficients d'égalisation et de pondération. On prévoit donc des commutateurs de voie $39_1$ à $39_n$ et deux commutateurs de combinaison 310 et 316, qui permettent de changer le signal d'erreur pris en compte.

La commutation de ces commutateurs est contrôlée par le taux d'erreur sur le signal reçu. Le taux d'erreur est obtenu simplement en comparant 311 une information de référence connue du récepteur, donc complètement sûre, à une information de référence reçue, correspondant à la même information de référence émise périodiquement, par exemple en étant multiplexée à l'émission avec le signal utile grâce à une structure de trame permettant simplement cette insertion périodique.

Cette information de référence est également utilisée pour calculer les coefficients de pondération, lors de la seconde phase.

Dans la phase d'acquisition (commutateurs en position 1), le calcul des coefficients d'égalisation est fait "en local" pour chaque voie. Les démodulateurs $34_i$ alimentent des modules $312_i$ de décision, similaires au module 37 de décision du combineur.

Les modules de calcul des coefficients d'égalisation $33_i$ mettent en oeuvre l'algorithme du gradient sur un signal d'erreur de voie i correspondant à la différence $313_i$ entre le signal démodulé et la décision correspondante (via le commutateur $39_i$).

Dans le même temps, un module 314 de calcul des coefficients de pondération est alimenté par la différence 315 entre le signal combiné et la décision correspondante (via le commutateur 310, en position 1).

Dès que le dispositif est accroché sur l'information de référence (taux d'erreur inférieur à un seuil prédéterminé) les commutateurs sont basculés en position 2, correspondant à la phase de fonctionnement normal.

La décision sur le signal combiné alimente par ailleurs un module 317 d'extraction de l'information de référence. En position 2, le signal d'erreur pour le calcul des coefficients de pondération se fait donc à partir de la différence 315 entre l'information de référence extraite et le signal combiné, saisi au moment de réception (ou passage) de la référence (commandée par l'extracteur de référence 317).

Le module 314 de calcul des coefficients de pondération ne fonctionne que sur l'information de référence. Le reste du temps, les coefficients ne varient pas.

La séquence de "référence", $y_k$, connue des deux extrémités en valeur et en position, est donc insérée par la trame dans le train transmis (faible augmentation du débit : 1,5 %).

En réception, avant régénération (sur l'oeil), on effectue donc les opérations suivantes :

- on "intercepte" la valeur $x_k$ de chacun des bits de référence sur chaque voie i de diversité : $x_{ki}$
- une mesure d'erreur est faite sur chacun des bits $z_k$ de la séquence de référence après combineur :
  $z_k = a_1 x k_1 + ... + a_n x k_n$     ai : coefficients de combinaison.

Les $z_k$ donnent une image fidèle du train transmis car multiplexés avec lui.

Cette mesure d'erreur permet d'alimenter un processeur de calcul qui développe l'algorithme du gradient, pour minimiser l'erreur quadratique moyenne /c/² en fonction de $a_i$ :

$$a_i(t+1) = a_i^{(t)} - \mu e_k x_{ki}$$

Par ailleurs, dans chaque voie, l'erreur est calculée, en phase 2, à partir de la différence entre la décision combinée, donc de meilleure qualité (via le commutateur $39_i$ en position 2), et leur propre signal égalisé.

Le fonctionnement des modules de calcul $33_i$ reste le même dans les deux phases.

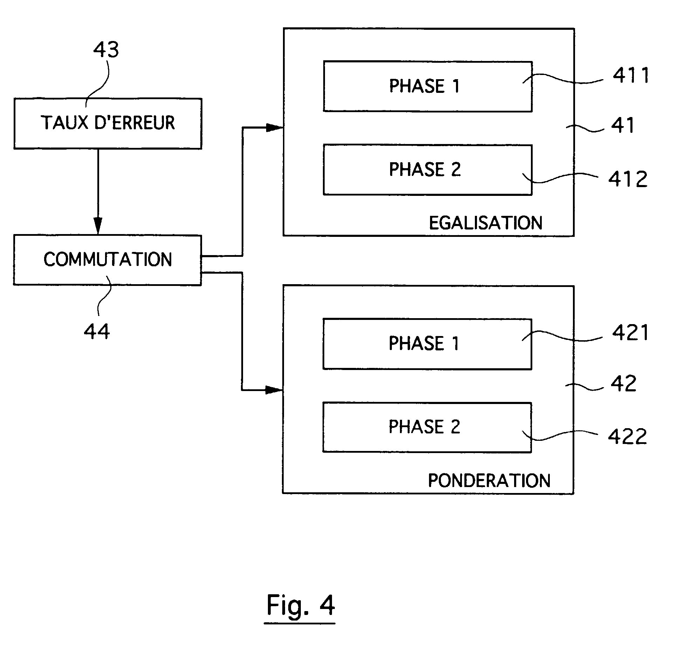

La figure 4 illustre de façon simplifiée le procédé de l'invention.

D'une façon générale, l'invention porte sur une approche nouvelle du calcul des coefficients d'égalisation 41, pour chaque voie, et du calcul des coefficients de pondération 42, pour la combinaison.

On mesure le taux d'erreur 43, par analyse du signal de référence. Au-delà d'un seuil prédéterminé, on assure la commutation 44 de la phase d'acquisition vers la phase de fonctionnement normal.

Bien sûr, si le taux d'erreur devient très défavorable en phase de fonctionnement normal (supérieure à un seuil fixé), on effectue une commutations 44 sur la phase d'acquisition, pour reprise du processus.

Par ailleurs, il est possible que les commutations aient lieu à des instants différents, le basculement pour la pondération pouvant s'effectuer légèrement avant le basculement pour l'égalisation.

Comme déjà indiqué précédemment, l'invention fonctionne de la façon suivante :

- égalisation 41 :

  - phase d'acquisition (phase 1) 411 : prise en compte de la décision locale pour chaque voie ;
  - phase de fonctionnement normal (phase 2) 412 : prise en compte de la décision combinée ;

- pondération 42 :

  - phase d'acquisition (phase 1) 421 : prise en compte de la décision combinée (associée au signal combiné avant décision) ;

- phase de fonctionnement normal (phase 2) 422 : prise en compte d'une analyse de l'information de référence.

Ainsi selon l'invention, on réalise une combinaison "au maximum de qualité". Le combineur fait participer au mieux chacune des voies. Toute voie, même mauvaise, peut apporter une contribution positive à la qualité.

On obtient un meilleur rapport signal à bruit. En effet, le combineur est du type "optimal" : il maximalise le rapport signal à bruit, car la puissance de bruit est égale à l'erreur quadratique moyenne, qu'on minimise.

L'invention assure la prise en compte automatique du brouillage et de la distorsion.

Une voie brouillée, ou insuffisamment corrigée par l'égaliseur (s'il existe) placé en amont est automatiquement éliminée ou pondérée en fonction de ce qu'elle peut apporter à la qualité de transmission, sans dispositif (en général compliqué et facilement mis en échec) de détection supplémentaire.

Enfin, pour les mêmes raisons que précédemment, l'invention assure l'élimination automatique de voie en panne.

## Revendications

1. Egaliseur-combineur pour récepteur en diversité, mettant en oeuvre au moins deux voies de réception recevant chacune un signal numérique reçu, correspondant à un signal numérique émis unique, chacune desdites voies de réception comprenant :

   - un égaliseur ($32_i$), piloté par des moyens ($33_i$) de calcul de coefficients d'égalisation et délivrant un signal égalisé,
   - un démodulateur ($34_i$), alimenté par ledit signal égalisé et délivrant un signal démodulé, et
   - un pondérateur ($35_i$), recevant ledit signal démodulé et délivrant un signal pondéré, en fonction d'un coefficient de pondération,

   lesdits signaux pondérés étant ensuite combinés par un sommateur de diversité (36), délivrant un signal combiné et alimentant un estimateur global (37), qui délivre une estimation globale (38) du signal source émis,
caractérisé en ce que lesdits moyens (33;) de calcul de coefficients d'égalisation de chacune desdites voies tiennent compte :

- d'un premier signal d'erreur de voie, représentatif d'une comparaison (313$_i$) entre ledit signal démodulé et une estimation de voie du signal source émis, délivrée par un estimateur de voie (312$_i$) alimenté par ledit signal démodulé dans ladite voie, lors d'une phase d'acquisition (411), et
- d'un second signal d'erreur de voie, représentatif d'une comparaison (313$_i$) entre ledit signal démodulé et ladite estimation globale (38) du signal source émis. lors d'une phase de fonctionnement normal (412),

et en ce qu'il comprend des moyens (314) de calcul desdits coefficients de pondération, tenant compte :

- d'un premier signal d'erreur globale, représentatif d'une comparaison (315) entre ledit signal combiné et ladite estimation globale (38) du signal source émis, lors de ladite phase d'acquisition (421), et
- d'un second signal d'erreur globale, représentatif d'une comparaison (315) entre une information de référence locale, connue a priori du récepteur, et une information de référence reçue correspondante, extraite périodiquement de ladite estimation globale, lors de ladite phase de fonctionnement normal (422).

2. Egaliseur-combineur selon la revendication 1, caractérisé en ce qu'il comprend des moyens de contrôle du passage de la phase d'acquisition à la phase de fonctionnement normal, assurant le passage (44) à ladite phase de fonctionnement normal en fonction d'une mesure d'un taux d'erreur (43) sur ladite information de référence.

3. Egaliseur-combineur selon la revendication 2, caractérisé en ce que lesdits moyens de contrôle du passage de la phase d'acquisition à la phase de fonctionnement normal gèrent indépendamment les instants de changement de phase pour lesdits égaliseurs (33$_i$) et pour lesdits pondérateurs (35$_i$).

4. Egaliseur-combineur selon l'une quelconque des revendications 1 à 3, caractérisé en ce que lesdits moyens (314) de calcul desdits coefficients de pondération mettent en oeuvre l'algorithme du gradient, visant à minimiser l'expression $|z_k-y_k|^2$ en fonction de a$_i$, où :

- y$_k$ est l'information de référence connue du récepteur ;
- z$_k$ est l'information de référence tel que contenue dans ledit signal combiné, avec: $z_k = a_1xk_1 +...+ a_mx_{km}$, où:

    - m est le nombre de voies ;
    - x$_{ki}$ est l'information de référence tel que contenue dans la voie indicée i ;
    - a$_i$ est le coefficient de pondération affecté à la voie indicée i ;

- k est un indice temporel.

5. Egaliseur-combineur selon l'une quelconque des revendications 1 à 4, caractérisé en ce que lesdits égaliseurs (32$_i$) mettent en oeuvre des filtres transverses à coefficients complexes libres.

6. Egaliseur-combineur selon l'une quelconque des revendications 1 à 5, caractérisé en ce qu'un mot unique est inséré dans chaque trame de signal émis, à un emplacement prédéterminé, permettant de synchroniser l'information de référence.

7. Récepteur en diversité caractérisé en ce qu'il met en oeuvre un égaliseur-combineur selon l'une quelconque des revendications 1 à 6.

8. Procédé de réception en diversité, sur au moins deux voies de réception recevant chacune un signal numérique reçu, correspondant à un signal numérique émis unique, chacun desdits signaux numériques reçus étant égalisés (32$_i$), démodulés (34$_i$) et pondérés (35$_i$) séparément, puis regroupés (36) pour former un signal combiné, qui est soumis à une prise de décision globale (37) pour délivrer une estimation globale du signal source émis, caractérisé en ce que les coefficients d'égalisation de chacune desdites voies sont calculés en fonction :

- d'un premier signal d'erreur de voie, représentatif d'une comparaison entre ledit signal démodulé et une estimation de voie du signal source émis, lors d'une phase d'acquisition (411), et
- d'un second signal d'erreur de voie, représentatif d'une comparaison entre ledit signal démodulé et ladite estimation globale du signal source émis, lors d'une phase de fonctionnement normal (412),

et en ce que les coefficients de pondération sont calculés en fonction :

- d'un premier signal d'erreur globale, représentatif d'une comparaison entre ledit signal combiné et ladite estimation globale du signal source émis, lors de ladite phase d'acquisition (421), et
- d'un second signal d'erreur globale, représentatif d'une comparaison entre une information de référence locale, connue a priori du récepteur, et une information de référence reçue correspondante, extraite périodiquement de ladite estimation globale, lors de ladite phase de fonctionnement normal (422).

9. Procédé selon la revendication 8, caractérisé en ce qu'il comprend une étape (43) de détermination d'un taux d'erreur sur ladite information de référence, et une étape (44) de contrôle du passage de ladite phase d'acquisition à ladite phase de fonctionnement normal, par comparaison dudit taux d'erreur à un premier seuil prédéterminé.

10. Procédé selon l'une quelconque des revendications 8 et 9, caractérisé en ce qu'il prévoit une phase intermédiaire, entre ladite phase d'acquisition et ladite phase de fonctionnement normal, pendant laquelle :

- lesdits coefficients d'égalisation de chacune desdites voies sont calculés en fonction dudit premier signal d'erreur de voie, représentatif d'une comparaison entre ledit signal démodulé et une estimation de voie du signal source émis, et
- lesdits coefficients de pondération sont calculés en fonction dudit second signal d'erreur globale, représentatif d'une comparaison entre une information de référence locale, connue a priori du récepteur, et une information de référence reçue, extraite périodiquement de ladite estimation globale.

11. Procédé selon l'une quelconque des revendications 8 à 10, caractérisé en ce qu'il prévoit un passage de ladite phase de fonctionnement normal vers ladite phase d'acquisition, lorsque le taux d'erreur calculé sur ladite information de référence est supérieur à un second seuil prédéterminé.

Fig. 1

Fig. 2

Fig. 3

EP 0 814 575 A1

Fig. 4

EP 0 814 575 A1

Office européen
des brevets

**RAPPORT DE RECHERCHE EUROPEENNE**

Numero de la demande

EP 97 40 1326

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | QINGLI LIU ET AL: "PERFORMANCE OF DECISION-FEEDBACK EQUALIZERS WITH DUAL ANTENNA DIVERSITY" PERSONAL COMMUNICATION - FREEDOM THROUGH WIRELESS TECHNOLOGY, SECAUCUS, NJ., MAY 18 - 20, 1993, no. CONF. 43, 18 mai 1993, INSTITUTE OF ELECTRICAL AND ELECTRONICS ENGINEERS, pages 637-640, XP000393263 * abrégé * * page 638, colonne de gauche, ligne 24 - ligne 48 * * figure 1 * --- | 1,7,8 | H04B7/08 H04B7/005 |
| A | EP 0 631 399 A (NIPPON ELECTRIC CO) 28 décembre 1994 * abrégé * * page 2, ligne 8 - ligne 23 * * page 2, ligne 45 - page 3, ligne 10 * * page 3, ligne 46 - page 4, ligne 19 * * page 4, ligne 57 - page 5, ligne 41 * * revendication 1 * * figure 2 * --- | 1,7,8 | |
| A | US 5 027 371 A (SEHIER PHILIPPE ET AL) 25 juin 1991 * abrégé * * colonne 2, ligne 44 - colonne 3, ligne 32 * * colonne 4, ligne 17 - ligne 24 * * revendications 1,2 * * figure 1 * ----- | 1,7,8 | |

DOMAINES TECHNIQUES RECHERCHES (Int.Cl.6)

H04B
H04L

Le présent rapport a été établi pour toutes les revendications

| Lieu de la recherche | Date d'achèvement de la recherche | Examinateur |
|---|---|---|
| LA HAYE | 23 septembre 1997 | Lopez Marquez, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

12